# EUROPÄISCHE PATENTSCHRIFT

(11) **EP 2 412 252 B1**
(45) Veröffentlichungstag und Bekanntmachung des Hinweises auf die Patenterteilung: **11.06.2014**
(21) Anmeldenummer: 11450095.2
(22) Anmeldetag: 26.07.2011
(51) Int. Cl.: A23N 1/02, A23N 1/00, A47J 19/02

(54) **Fruchtpresse**
Fruit press
Presse-fruits

(30) Priorität: 28.07.2010 AT 12692010
(43) Veröffentlichungstag der Anmeldung: 01.02.2012
(73) Patentinhaber: T M P Technic-Marketing-Products GmbH, 4020 Linz (AT)
(72) Erfinder: Pichler, Josef, 4211 Albernhof (AT)
(74) Vertreter: Hübscher, Helmut

(56) Entgegenhaltungen:
- EP-A1- 0 623 301
- EP-A1- 1 391 156
- WO-A1-2004/052126
- US-A- 5 170 699

## Beschreibung

Die Erfindung bezieht sich auf eine Fruchtpresse mit einem an einem Gestell abnehmbar angeordneten, eine Presskammer umschließenden Gehäuse, mit im Gestell gelagerten und in die Presskammer ragenden, parallelen Wellen einerseits für zwei gegensinnig antreibbare Presswalzen mit über den Umfang verteilten, halbkugelförmigen Pressausnehmungen und anderseits für zwei unterhalb der Presswalzen vorgesehene, gegensinnig zu den Presswalzen antreibbare Stempelköpfe, die mit den Pressausnehmungen der Presswalzen zusammenwirkende, kugelförmige Pressstempel bilden, mit einem entlang einer Führung zwischen die Presswalzen verschiebbaren Messer und mit einer lösbaren Abziehsicherung für die axial auf ihren konischen Wellen aufgeschobenen Presswalzen und Stempelköpfe.

Bei bekannten Fruchtpressen dieser Art (WO 2004/052126 A1) ist eine durch ein abnehmbares Gehäuse umschlossene Presskammer mit zwei nebeneinander angeordneten Presswalzen und zwei diesen Presswalzen zugeordneten mit den Presswalzen jeweils ein Presswerkzeug bildenden Stempelköpfen vorgesehen, die mit kugelförmigen Presstempeln ausgerüstet sind. Aufgrund der gegensinnigen Drehung der einander zugeordneten Presswalzen und Stempelköpfe der beiden Presswerkzeuge greifen die Pressstempel in halbkugelförmige Pressausnehmungen der Presswalzen ein. Die auszupressenden Früchte, üblicherweise Schalenfrüchte, insbesondere Orangen, werden in den Zwickelbereich zwischen den nebeneinander angeordneten Presswalzen zugeführt, wo sie von den Pressausnehmungen der Presswalzen aufgenommen und zwischen den Presswalzen zu den unterhalb der Presswalzen liegenden Stempelköpfen gefördert werden. Da zwischen den Presswalzen ein Messer vorgesehen ist, das entgegen der Förderrichtung der Früchte über Mitnehmernocken der Stempelköpfe zu einem Schnitthub angehoben wird, werden die Früchte halbiert, sodass die beim Weiterdrehen der Presswalzen in die Pressausnehmungen eingreifenden Pressstempel die Fruchthälften auspressen. Zum Abstreifen der auf den Pressstempeln haftenden Fruchtschalen sind auf den voneinander abgekehrten Seiten der Stempelköpfe Abstreifer vorgesehen, die mit einem schwertartigen Abstreiffinger beim Vorbeidrehen der Stempelköpfe in eine Umfangsnut der Pressstempel eingreifen, sodass die halben Fruchtschalen auf den Abstreiffinger auflaufen und vom Pressstempel gelöst werden, um entlang einer Ablenkfläche der Abstreifer in einen Sammelbehälter ausgetragen zu werden.

Zum notwendigen Reinigen der Presskammer ist zunächst das Gehäuse vom es tragenden Gestell abzunehmen, bevor die Pressstempel und die Presswalzen zu ihrer Reinigung von den zugehörigen, mit ihrem Antrieb im Gestell gelagerten Wellen abgezogen werden können. Obwohl auch das Messer und die Abstreifer abnehmbar gelagert sind und daher mit den Pressstempeln und Presswalzen zusammen mit dem Gehäuse außerhalb der Presskammer beispielsweise in einer Spülmaschine gereinigt werden können, bleibt der Aufwand für die im Bereich des Gestells vorzunehmenden Reinigungsarbeiten vergleichsweise hoch, weil ja das Gestell die Rückwand der Presskammer bildet.

Der Erfindung liegt somit die Aufgabe zugrunde, eine Fruchtpresse der eingangs geschilderten Art so auszugestalten, dass die regelmäßig durchzuführenden Reinigungsarbeiten auf ein Minimum reduziert werden können.

Die Erfindung löst die gestellte Aufgabe dadurch, dass die Presskammer eine am Gestell abnehmbar befestigte, von den Wellen für die Presswalzen und Stempelköpfe flüssigkeitsdicht durchsetzte Rückwand aufweist, die die Führung für das Messer trägt.

Durch das Vorsehen einer das Gestell von der Presskammer abdichtenden Rückwand für die Presskammer kann das Gestell selbst nicht durch beim Pressen der Früchte abspritzenden Fruchtsaft oder Fruchtfleisch verunreinigt werden, sodass dann einfache Reinigungsbedingungen außerhalb der Presskammer gewährleistet werden können, wenn alle Konstruktionsteile auf der dem Gestell abgewandten Seite der Rückwand abgenommen werden können. Dies ist für die auf ihre Wellen axial aufgesteckten Presswalzen und Stempelköpfe ohne weiteres gegeben, nicht aber für das zwischen den Stempelköpfen entlang einer Führung verschiebbar gelagerte Messer. Aus diesem Grund wird nicht das Gestell, sondern die Rückwand der Presskammer mit der Führung für das Messer versehen. Die Rückwand kann daher nach dem Lösen vom Gestell zum Reinigen zusammen mit der Führung für das Messer entlang der Wellen für die Presswalzen und die Stempelköpfe abgezogen werden, was sonst notwendige Reinigungsarbeiten im Gestellbereich überflüssig macht.

Wie die Messerführung könnte auch die Lagerung der Abstreifer für die Fruchtschalen der Rückwand zugeordnet werden. Um die damit verbundene aufwendigere Konstruktion und Reinigung der Rückwand zu vermeiden, kann das Gestell zwei zu den Wellen für die Stempelköpfe parallele, die Rückwand der Presskammer flüssigkeitsdicht durchsetzende Achsen zur schwenkbaren Lagerung zweier im Bereich der Umlaufbahnen der Pressstempel angeordneter Abstreifer für die von den Pressstempeln aufgenommenen Fruchtschalen aufweisen, sodass die Abstreifer lediglich von ihren Lagerachsen abzuziehen sind, bevor die Rückwand selbst abgezogen werden kann.

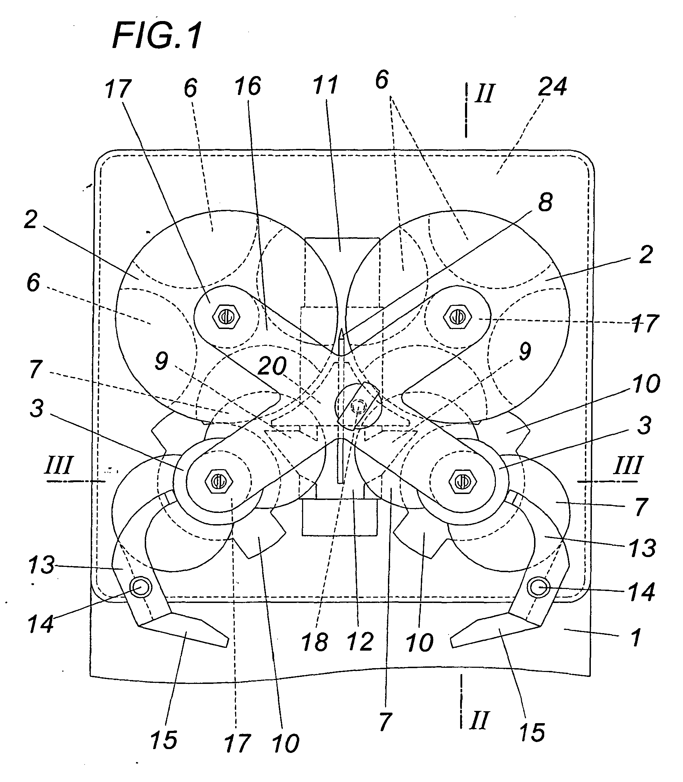

In der Zeichnung ist der Erfindungsgegenstand beispielsweise dargestellt. Es zeigen
- Fig. 1: eine erfindungsgemäße Fruchtpresse in stirnseitigen Vorderansicht bei abgenommenen Gehäuse
- Fig. 2: die Fruchtpresse in einem Schnitt nach der Linie II-II der Fig. 1 und

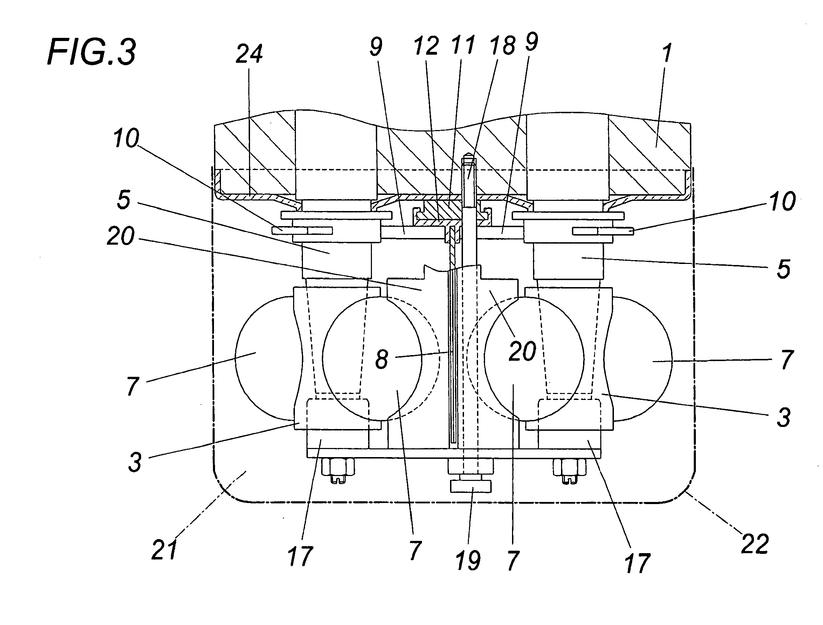

- Fig. 3: diese Fruchtpresse in einem Schnitt nach der Linie III-III.

Die dargestellte Fruchtpresse weist ein Gestell 1 auf, in dem zwei Presswalzen 2 und unterhalb dieser Presswalzen 2 zwei mit den Presswalzen 2 zusammenwirkende Stempelköpfe 3 auf parallelen Wellen 4 und 5 gelagert sind. Die Presswalzen 2 sind mit vier über den Umfang verteilten, halbkugelförmigen Pressausnehmungen 6 versehen, die mit kugelförmigen Pressstempeln 7 zusammenwirken.

Im Zwickelbereich zwischen den beiden Presswalzen 2 ist ein Messer 8 der Höhe nach verschiebbar gelagert, das über mit den Stempelköpfen 3 umlaufende, mit Messeranschlägen 9 zusammenwirkende Mitnehmernocken 10 in einer Führung 11 verschoben werden kann. Das Messer 8 ist zu diesem Zweck in einem auf der Führung 11 gelagerten Schlitten 12 befestigt, Die von oben in den Zwickelbereich zwischen den Presswalzen 2 zugeführten Früchte, die von den in der Aufnahmestellung nach oben offenen Pressausnehmungen 6 aufgenommen werden, werden beim Abwärtsfördern durch die Presswalzen 2 an dem gegensinnig nach oben bewegten Messer 8 vorbeibewegt, das die Früchte halbiert, sodass die halbierten Früchte anschließend in den Pressausnehmungen 6 durch die in diese Pressausnehmungen 6 eingreifenden Pressstempel 7 ausgepresst werden. Die verbleibenden Schalenhälften mit den Fruchtresten bleiben an den Pressstempeln 7 haften und werden mit den Pressstempeln 7 aus den Pressausnehmungen 6 der Presswalzen 2 ausgetragen.

Zum Abstreifen der Fruchtschalen von den Pressstempeln 7 sind auf den voneinander abgekehrten Seiten der beiden Stempelköpfe 3 im Bereich der Umlaufbahnen der Pressstempel 7 Abstreifer 13 vorgesehen, die auf zu den Wellen 5 der Stempelköpfe 3 parallelen Achsen 14 drehbar gelagert sind und über Zusatzgewichte 15 mit einem Anschlagmoment beaufschlagt werden.

Um die Presswalzen 2 und die Stempelköpfe 3 auf den als Mehrkantwellen ausgebildeten, konischen Wellen 4 und 5 lösbar zu halten, ist eine axiale Abziehsicherung vorgesehen, die einen gemeinsamen Träger 16 mit axialen Anschlägen 17 für die Presswalzen 2 und die Stempelköpfe 3 umfasst. Zur Befestigung des gemeinsamen Trägers 16 dient ein Tragbolzen 18, der den Träger 16 mit einem Gewindeansatz durchsetzt, sodass der Träger 16 mit Hilfe einer Befestigungsmutter 19 unter einer axialen Beaufschlagung der Presswalzen 2 und der Stempelköpfe 3 gespannt werden kann. Aufgrund dieser konstruktiven Vorgabe ist das Abziehen der Presswalzen 2 und der Pressstempel 3 von den zugehörigen Wellen 4, 5 zu Reinigungs- und Wartungszwecken einfach. Es braucht ja lediglich der Träger 16 mit den Anschlägen 17 nach dem Lösen der Befestigungsmutter 19 vom Tragbolzen 18 abgenommen zu werden, um die Presswalzen 2 und Stempelköpfe 3 von den Wellen 4, 5 axial abziehen zu können. Zur Montage der Presswalzen 4 und Stempelköpfe 5 ist in umgekehrter Reihenfolge vorzugehen, wobei aufgrund der Abflachungen der Wellen 4, 5 nicht nur die Drehmitnahme gesichert, sondern auch die ordnungsgemäße gegenseitige Drehstellung der Presswalzen 2 und Stempelköpfe 3 gewährleistet wird.

Mit Hilfe des Tragbolzens 18 kann aber auch eine Gleitführung 20 für die halbierten Früchte gestellfest befestigt werden, um diese vom Messer 8 durchsetzte Gleitführung 20 axial vom Tragbolzen 18 abziehen zu können.

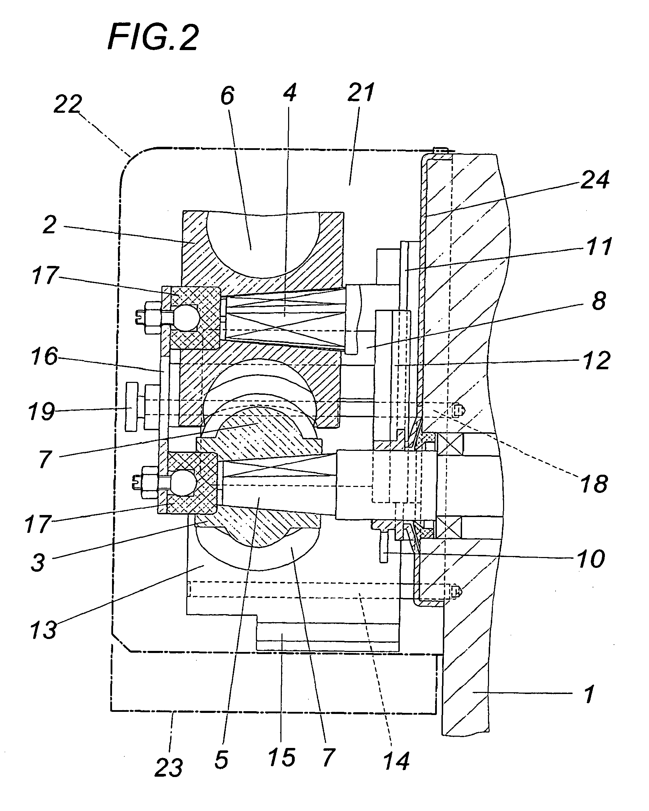

Die Presswalzen 2 und Stempelköpfe 3 sind mit den Abstreifern 13 in einer Presskammer 21 angeordnet, die nach außen durch ein strichpunktiert gezeichnetes Gehäuse 22 abgeschlossen wird. Der Boden der Presskammer 21 wird dabei durch eine in der Fig.2 strichpunktiert angedeutete Auffangwanne gebildet, die mit Durchbrüchen einerseits für die Abfuhr der Fruchtschalen und anderseits für das Sammeln des ausgepressten Fruchtsafts versehen ist. Im Gegensatz zu üblichen Presskammern weist die erfindungsgemäße Presskammer 21 eine dem Gestell 1 vorgelagerte, gesonderte Rückwand 24 auf, die von den Wellen 4, 5 für die Presswalzen 2 und die Stempelköpfe 3 flüssigkeitsdicht durchsetzt wird und in Richtung dieser Wellen 4, 5 vom Gestell 1 abgezogen werden kann. Wegen der geforderten Stabilität empfiehlt es sich aber auch, den Tragbolzen 19 und die Achsen 14 für die Abstreifer 13 im Gestell 1 zu lagern und flüssigkeitsdicht durch die Rückwand 24 zu führen. Lediglich die Führung 11 für den Schlitten 12 des Messers 8 ist an der Rückwand selbst anzuordnen, um mit dem Abziehen der Rückwand 24 alle einer Verschmutzung durch ausgepressten Saft oder Pressrückstände ausgesetzten Konstruktionsteile vom Gestell 1 zu entfernen und außerhalb des Gestells 1 einer vorzugsweise maschinellen Reinigung zu unterziehen.

Zu diesem Zweck sind vorerst das Gehäuse 22 und die Auffangwanne 23 vom Gestell 1 zu entfernen, bevor nach einem Lösen des Trägers 16 die Presswalzen 2 und die Stempelköpfe 3 sowie die Gleitführung 20 für die halbierten Früchte und die Abstreifer 13 abgenommen werden können. Anschließend kann die Rückwand 24 mit der Führung 11 und dem Schlitten 12 für das Messer 8 von den Wellen 2, 3 abgezogen werden, wonach der Schlitten 12 aus der Führung 11 ausgeschoben werden kann. Zur Montage der gereinigten Teile ist in umgekehrter Reihenfolge vorzugehen.

## Patentansprüche

1. Fruchtpresse mit einem an einem Gestell (1) abnehmbar angeordneten, eine Presskammer (21) umschließenden Gehäuse (22), mit im Gestell (1) gelagerten und in die Presskammer (21) ragenden, parallelen Wellen (4, 5) einerseits für zwei gegensinnig antreibbare Presswalzen (2) mit über den Umfang verteilten, halbkugelförmigen Pressausnehmungen (6) und anderseits für zwei unterhalb der Presswalzen (2) vorgesehene, gegensinnig zu den Presswalzen (2) antreibbare Stempelköpfe (3), die mit den Pressausnehmungen (6) der Presswalzen (2) zusammenwirkende, kugelförmige Pressstempel (7) bilden, mit einem entlang einer Führung (11) zwischen die Presswalzen (2) verschiebbaren Messer (8) und mit einer lösbaren Abziehsicherung für die axial auf ihren konischen Wellen (4, 5) aufgeschobenen Presswalzen (2) und Stempelköpfe (3), **dadurch gekennzeichnet, dass** die Presskammer (21) eine am Gestell (1) abnehmbar befestigte, von den Wellen (4, 5) für die Presswalzen (2) und Stempelköpfe (3) flüssigkeitsdicht durchsetzte Rückwand (24) aufweist, die die Führung (11) für das Messer (8) trägt.

2. Fruchtpresse nach Anspruch 1, **dadurch gekennzeichnet, dass** das Gestell (1) zwei zu den Wellen (5) für die Stempelköpfe (3) parallele, die Rückwand (24) der Presskammer (21) flüssigkeitsdicht durchsetzende Achsen (14) zur schwenkbaren Lagerung zweier im Bereich der Umlaufbahnen der Pressstempel (7) angeordneter Abstreifer (13) für die von den Pressstempeln (7) aufgenommenen Fruchtschalen aufweist.

## Claims

1. Fruit press, comprising a housing (22) which is removably arranged on a frame (1) and encloses a pressing chamber (21), parallel shafts (4, 5) which are mounted in the frame (1) and protrude into the pressing chamber (21), on the one hand for two press rollers (2) which can be driven in opposite directions and which comprise hemispherical press recesses (6) distributed over the circumference, and on the other hand for two punch heads (3) which are provided beneath the press rollers (2), can be driven in opposite directions in relation to the press rollers (2), and form spherical press punches (7) which cooperate with the press recesses (6) of the press rollers (2), a knife (8) which is displaceable along a guide (11) between the press rollers (2), and a detachable securing means against withdrawal for the press rollers (2) and punch heads (3) which are slid axially onto their conical shafts (4, 5), **characterised in that** the pressing chamber (21) comprises a rear wall (24) which is detachably fastened to the frame (1), is penetrated in a fluid-tight manner by the shafts (4, 5) for the press rollers (2) and punch heads (3), and carries the guide (11) for the knife (8).

2. Fruit press as claimed in claim 1, **characterised in that** the frame (1) comprises two arbors (14) which are parallel to the shafts (5) for the punch heads (3) and penetrate the rear wall (24) of the pressing chamber (21) in a fluid-tight manner for pivotably bearing two stripping members (13) which are arranged in the region of the circular orbits of the press punches (7) for the skins of the fruit received by the press punches (7).

## Revendications

1. Presse-fruits avec un boîtier (22) entourant une chambre de compression (21), disposée de manière amovible au niveau d'un bâti (1), avec des arbres (4, 5) parallèles, dépassant dans la chambre de compression (21) et logés dans le bâti (1), d'une part, pour deux rouleaux presseurs (2) pouvant être entraînés en sens inverse, avec des évidements de pressage (6) hémisphériques, répartis sur la circonférence, et d'autre part, pour deux têtes de plateau de compression (3) pouvant être entraînées en sens inverse des rouleaux presseurs (2), prévues en dessous des rouleaux presseurs (2) qui forment des plateaux de compression (7) sphériques, concourant avec les évidements de pressage (6) des rouleaux presseurs (2), avec un couteau (8) mobile entre les rouleaux presseurs (2) le long d'un guide (11), et avec une sécurité anti-enlèvement détachable pour les rouleaux presseurs (2) enfichés axialement sur leurs arbres (4, 5) coniques et les têtes de plateau de compression (3), **caractérisé en ce que** la chambre de compression (21) présente une paroi arrière (24), traversée, de manière étanche aux liquides, par les arbres (4, 5) pour les rouleaux presseurs (2) et têtes de plateau de compression (3), fixée de manière amovible au niveau du bâti (1) qui porte le guide (11) pour le couteau (8).

2. Presse-fruits selon la revendication 1, **caractérisé en ce que** le bâti (1) présente deux axes (14) traversant, de manière étanche aux liquides, la paroi arrière (24) de la chambre de compression (21), parallèles aux arbres (5) pour les têtes de plateau de compression (3), pour loger de manière pivotable deux racleurs (13) disposés dans la zone des trajectoires des plateaux de compression (7), pour les pelures de fruit reçues des plateaux de compression (7).
